# EUROPÄISCHE PATENTANMELDUNG

(11) **EP 4 390 205 A1**
(43) Veröffentlichungstag der Anmeldung: **26.06.2024**
(21) Anmeldenummer: 23212702.7
(22) Anmeldetag: 28.11.2023
(51) Int. Cl.: F16L 33/207, F16L 33/01

(54) **ARMATUR ZUM ANSCHLIESSEN EINES SCHLAUCHES, INSBESONDERE FÜR HOCH-DRUCK-WASSERSTOFF-FLUIDLEITUNGEN**

(30) Priorität: 19.12.2022 DE 102022213894
(71) Anmelder: ContiTech Deutschland GmbH, 30165 Hannover (DE)
(72) Erfinder: Mancinelli, Piero, 30165 Hannover (DE); Dr. Pagnanelli, Fabrizio, 30165 Hannover (DE)
(74) Vertreter: Continental Corporation

(57) **Zusammenfassung**

Eine Armatur (10) zum Anschließen eines Schlauches (20), insbesondere für Hochdruck-Wasserstoff-Fluidleitungen, mit einem Nippel (30) und einer Presshülse (40), wobei auf den Nippel (30) ein Endabschnitt (21) des Schlauches (20) aufschiebbar und mittels der Presshülse (40) auf dem Nippel (30) abdichtend verpressbar ist, wobei der Nippel (30) eine Ringnut (34) aufweist, in der ein Dichtelement (35) zum Abdichten des Nippels (30) gegen eine Innenfläche (22) des Schlauches (20) angeordnet ist, wobei die Presshülse (40) an ihrer Innenseite (41) mehrere in Axialrichtung voneinander beabstandet angeordnete Verpressvorsprünge (42) sowie einen das Dichtelement (35) in Axialrichtung zumindest teilweise überdeckenden Dichtelement-Verpressvorsprung (43) aufweist.

## Beschreibung

Die vorliegende Erfindung betrifft eine Armatur zum Anschließen eines Schlauches, insbesondere für Hochdruck-Wasserstoff-Fluidleitungen. Ferner betrifft die Erfindung eine Verbindungsvorrichtung mit einer solchen Armatur. Die Erfindung betrifft zudem ein Hochdrucktanksystem und einen Hochdruckfahrzeugtanksystem mit einer derartigen Verbindungsvorrichtung.

Derartige Armaturen finden in Fluidsystemen Verwendung, bei denen ein Fluid durch flexible Schläuche transportiert wird. Um die Schläuche an weitere Leitungen oder Geräte, wie z.B. an eine Kraftstoffdüse bzw. Zapfpistole, anzuschließen werden die Schlauchenden mit Armaturen versehen. Häufig wird hierbei ein Endabschnitt des Schlauches auf einen Nippel der Armatur aufgeschoben und mittels einer Presshülse der Armatur auf dem Nippel verpresst (z.B. gecrimpt), wobei die Presshülse plastisch verformt wird. Die EP 2 510 271 A1 zeigt ein Beispiel einer an einer Fluidleitung einer Klimaanlage für Kraftfahrzeuge verpressten Armatur an.

Flexible Schläuche sind in der Regel hybride Verbundstrukturen aus mehreren Schichten, wie z.B. einer einen Thermoplasten enthaltende Innenschicht, eine einen insbesondere metallischen Festigkeitsträger enthaltenden Verstärkungsschicht und eine einen Elastomer oder einen Thermoplasten enthaltenden Außenschicht. Die EP 3 309 438 A1 zeigt ein Beispiel eines derartigen Schlauches, der zum Transport von Wasserstoff ausgebildet ist.

Die Verbindung zwischen der Armatur und dem Schlauch kann je nach Anwendungsfall erheblichen mechanischen Belastungen ausgesetzt sein. Insbesondere bei Hochdruck-Wasserstoff-Fluidleitungen, wie sie z.B. an Wasserstoffzapfsystemen für mobile Wasserstoffverbraucher (z.B. Brennstoffzellenfahrzeuge) benötigt werden, muss aufgrund des hohen Betriebsdrucks von regelmäßig über 1000 bar eine besonders hohe Dichtigkeit der Verbindung gewährleistet werden. Gleichwohl muss eine möglichst geringe Permeation von Wasserstoff durch die Schnittstelle zwischen Armatur und Schlauch gewährleistet sein.

Aufgabe der vorliegenden Erfindung ist es daher, eine Armatur bereitzustellen, mit der eine besonders dichte Verbindung mit einem Schlauch herstellbar ist. Insbesondere soll die Armatur für den Einsatz in Verbindung mit Hochdruck-Wasserstoff-Fluidleitungen geeignet sein und hierbei eine möglichst geringe Permeation von Wasserstoff gewährleisten.

Diese Aufgabe wird durch eine Armatur mit den Merkmalen des Anspruchs 1, eine Verbindungsvorrichtung mit den Merkmalen des Anspruchs 10, ein Hochdrucktanksystem mit den Merkmalen des Anspruchs 14 sowie ein Hochdruckfahrzeugtanksystem mit den Merkmalen des Anspruchs 15 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen.

Die erfindungsgemäße Armatur zum Anschließen eines Schlauches hat einen Nippel, der eine Längsachse definiert, und eine Presshülse, wobei der Nippel einen von einem rohrförmigen Abschnitt der Presshülse in Axialrichtung überdeckten Schlauchaufnahmeabschnitt aufweist, auf den ein Endabschnitt des Schlauches in einer Aufschubrichtung aufschiebbar und mittels der Presshülse auf dem Nippel abdichtend verpressbar ist, wobei der Nippel eine Ringnut aufweist, in der ein insbesondere als O-Ring ausgebildetes Dichtelement zum Abdichten des Nippels gegen eine Innenfläche des Schlauches angeordnet ist, wobei die Presshülse an ihrer Innenseite mehrere in Axialrichtung voneinander beabstandet angeordnete und sich (um die Längsachse) ringsum erstreckende Verpressvorsprünge sowie einen sich ringsum erstreckenden Dichtelement-Verpressvorsprung aufweist, der dazu ausgebildet ist, das Dichtelement in Axialrichtung zumindest teilweise, insbesondere vollständig, zu überdecken, wenn der Endabschnitt des Schlauches auf dem Nippel verpresst ist.

Der Erfindung liegt die Idee zugrunde, dem auf dem Nippel angeordneten Dichtelement einen eigenen Verpressvorsprung zuzuordnen, der primär dazu ausgebildet ist, einen das Dichtelement überdeckenden Abschnitt des Schlauches gegen das Dichtelement zu pressen, wenn der Schlauch auf dem Nippel verpresst ist. Auf diese Weise wird das insbesondere als O-Ring ausgebildete Dichtelement gezielt stärker eingeklemmt und entfaltet dadurch eine noch bessere Dichtwirkung. Vorzugsweise ist der Dichtelement-Verpressvorsprung von den übrigen Verpressvorsprüngen in Axialrichtung beabstandet. Bevorzugt ist der Dichtelement-Verpressvorsprung (in Aufschubrichtung betrachtet) vor den Verpressvorsprüngen angeordnet.

Der Dichtelement-Verpressvorsprung ist so ausgebildet, dass er das Dichtelement in Axialrichtung zumindest teilweise, insbesondere vollständig, überdeckt, wenn der Endabschnitt des Schlauches auf dem Nippel verpresst ist. In Abhängigkeit der Geometrie der Presshülse und des angewendeten Verpressverfahrens kann der Dichtelement-Verpressvorsprung in einigen Ausgestaltungen der Erfindung derart in Relation zu dem Dichtelement positioniert sein, dass der Dichtelement-Verpressvorsprung das Dichtelement erst im verpressten Zustand zumindest teilweise, insbesondere vollständig, überdeckt.

Die Armatur kann auch mit mehreren Dichtelementen versehen sein, die in dem Schlauchaufnahmeabschnitt jeweils in einer Ringnut des Nippels angeordnet sind. Der Dichtelement-Verpressvorsprung kann in einem solchen Fall beispielsweise auch zwei oder mehreren auf dem Nippel angeordneten Dichtelementen zugeordnet sein, wobei der Dichtelement-Verpressvorsprung die ihm zugeordneten Dichtelemente jeweils zumindest teilweise, insbesondere vollständig, überdeckt.

Der Schlauchaufnahmeabschnitt des Nippels ist insbesondere jener Abschnitt des Nippels, auf den eine Innenseite bzw. Innenschicht eines Schlauches geschoben wird.

Vorzugsweise ist die Presshülse und/oder ist der Nippel aus einem Metall, bevorzugt aus Stahl oder Aluminium, gefertigt. Insbesondere ist die Presshülse und/oder ist der Nippel jeweils einstückig ausgebildet.

Im Sinne dieser Erfindung überdeckt ein Bauteil ein anderes Bauteil in Axialrichtung, wenn sich die Bauteile in einem Axialabschnitt überlappen und das eine Bauteil das andere Bauteil umgibt.

In einer bevorzugten Ausgestaltung der erfindungsgemäßen Armatur sind die Ringnut und das darin angeordnete Dichtelement in der (in Aufschubrichtung betrachtet) ersten Hälfte des Schlauchaufnahmeabschnitts, bevorzugt im zweiten Viertel des Schlauchaufnahmeabschnitts, angeordnet. Es hat sich gezeigt, dass eine Positionierung in der ersten Hälfte des Schlauchaufnahmeabschnitts die Dichtigkeit begünstigt und die Permeation hemmt, da auf diese Weise eine Barriere für das durch den Schlauch zu transportierende Fluid möglichst nah an dem dem Schlauch zugewandten Ende des Nippels bereitgestellt wird. Eine Anordnung der Ringnut und des Dichtelements im zweiten Viertel des Schlauchaufnahmeabschnitts bietet darüber hinaus den Vorteil, dass vor dem Dichtelement (in Aufschubrichtung betrachtet) auf dem Nippel noch Raum für eine die Dichtigkeit weiter begünstigende Schlauchrückhaltefläche bleibt.

In einer weiteren bevorzugten Ausgestaltung der erfindungsgemäßen Armatur weist der Dichtelement-Verpressvorsprung einen größeren Innendurchmesser aufweist als die Verpressvorsprünge. Der Dichtelement-Verpressvorsprung dient somit primär dazu, den das Dichtelement überdeckenden Abschnitt des Schlauches gegen das Dichtelement zu pressen, während die Verspressvorsprünge primär dazu dienen, den Schlauch auf dem Nippel insbesondere gegen eine Relativbewegung in Axialrichtung zu sichern.

In einer weiteren bevorzugten Ausgestaltung der erfindungsgemäßen Armatur bildet der Dichtelement-Verpressvorsprung eine dem Dichtelement zugewandte Innenfläche mit einem konstanten Innendurchmesser aus, wobei die Innenfläche eine axiale Länge hat, die größer ist als die axiale Länge des Dichtelements. Auf diese Weise lässt sich der von der Innenfläche des Dichtelement-Verpressvorsprungs überdeckte Schlauchabschnitt besonders gleichmäßig gegen das Dichtelement pressen. Die Dichtigkeit wird gemäß einer weiteren bevorzugten Ausgestaltung der Erfindung weiter begünstigt, wenn die Innenfläche des Dichtelement-Verpressvorsprungs das Dichtelement in Axialrichtung vollständig überdeckt, wenn der Endabschnitt des Schlauches auf dem Nippel verpresst ist. Bevorzugt ragt die Innenfläche des Dichtelement-Verpressvorsprungs sowohl in als auch entgegen der Aufschubrichtung über das Dichtelement hinaus, so dass der Dichtelement-Verpressvorsprung den Schlauchabschnitt nicht nur gegen das gesamte Dichtelement, sondern auch gegen einen die Ringnut umgebenden Randbereich des Nippels presst und somit die Dichtigkeit in diesem Bereich weiter erhöht.

Um eine dichte Verbindung zwischen dem Nippel und einer Innenschicht des Schlauches zu begünstigen, bildet der Nippel, gemäß einer weiteren bevorzugten Ausgestaltung der erfindungsgemäßen Armatur, an der Außenseite des Schlauchaufnahmeabschnitts zumindest eine unebene Schlauchrückhaltefläche aus. Wenn der Schlauch mittels der Presshülse auf den Nippel verpresst bzw. gecrimpt wird, wird die insbesondere thermoplastische Innenschicht des Schlauches auf die Schlauchrückhaltefläche gepresst, wodurch die Unebenheiten der Schlauchrückhaltefläche in die Innenschicht des Schlauches eindringen, so dass eine dichte Verbindung entsteht, die überdies eine axiale Relativbewegung zwischen Schlauch und Nippel hemmt. Die zumindest eine unebene Schlauchrückhaltefläche kann dabei sich ringsum erstreckende Ausnehmungen aufweisen.

Vorzugsweise weist der Nippel an der Außenseite des Schlauchaufnahmeabschnitts eine erste unebene Schlauchrückhaltefläche und eine zweite unebene Schlauchrückhaltefläche auf, wobei sich die erste Schlauchrückhaltefläche (bezüglich der Aufschubrichtung) vor der zweiten Schlauchrückhaltefläche befindet, wobei die Ringnut und das darin angeordnete Dichtelement zwischen den beiden Schlauchrückhalteflächen angeordnet sind. Die Wirkung einer Schlauchrückhaltefläche, die die Dichtigkeit und Festigkeit der Verbindung begünstigt, kann somit sowohl auf einem (in Aufschubrichtung betrachtet) vor dem Dichtelement liegenden Abschnitt des Nippels als auch auf einem hinter dem Dichtelement liegenden Abschnitt des Nippels realisiert werden.

Bevorzugt weist die erste Schlauchrückhaltefläche konische Flächen ausbildende Ausnehmungen auf und/oder weist die zweite Schlauchrückhaltefläche zylindrische Flächen ausbildende Ausnehmungen auf. Ausnehmungen mit konischen Flächen im ersten Schlauchrückhalteabschnitt, deren jeweiliger Außendurchmesser sich in Aufschubrichtung aufweitet, führen beim Verpressen der Armatur auf einem Schlauch zu einem Verhaken des ersten Schlauchrückhalteabschnitts und der Innenschicht des Schlauches, was den Halt zwischen Nippel und Innenschicht und auch die Dichtigkeit der Verbindung begünstigt. Ausnehmungen mit zylindrischen Flächen im zweiten Schlauchrückhalteabschnitt dienen in erster Linie als Barrieren für das durch den Schlauch zu transportierende Fluid. Diese Ausnehmungen sollen im Falle, dass das Fluid das Dichtelement passiert, einen möglichst großen Druckverlust erzeugen, was eine Leckage und/oder Permeation hemmt. Beim Verpressen der Armatur auf einem Schlauch können die zwischen den Ausnehmungen liegenden Abschnitte des zweiten Schlauchrückhalteabschnitts zudem in die Innenschicht des Schlauches eindringen, was den Halt zwischen Nippel und Innenschicht und auch die Dichtigkeit der Verbindung weiter begünstigt. Vorzugsweise weist der zweite Schlauchrückhalteabschnitt zumindest vier, bevorzugt zumindest acht, besonders bevorzugt zumindest zehn, in Axialrichtung voneinander beabstandete, zylindrische Flächen ausbildende Ausnehmungen auf. Eine Ausnehmung bildet im Sinne dieser Erfindung eine zylindrische Fläche aus, wenn die Ausnehmung entlang ihrer axialen Länge zu mehr als 50 % zylindrisch ausgebildet ist.

Um eine möglichst einfache Herstellung einer Schlauchverbindung zu gewährleisten, weist der Nippel, gemäß einer weiteren bevorzugten Ausgestaltung der Erfindung, in dem Schlauchaufnahmeabschnitt bis auf die Ausnehmungen der zumindest einen Schlauchrückhaltefläche und die Ringnut für das Dichtelement einen konstanten Außendurchmesser auf.

Vorzugsweise weist die zweite Schlauchrückhaltefläche eine axiale Länge auf, die mindestens 1 ,5-mal so lang ist, bevorzugt mindestens 2-mal so lang ist, wie die axiale Länge der ersten Schlauchrückhaltefläche. Es hat sich gezeigt, dass bei einer derartigen konstruktiven Ausgestaltung eine hohe Dichtigkeit erzielt werden konnte.

Insbesondere überdecken sämtliche Verpressglieder jeweils einen Abschnitt der zweiten Schlauchrückhaltefläche. Auf diese Weise kann ein die zweite Schlauchrückhaltefläche überdeckender Abschnitt des Schlauchs besonders gut auf die zweite Schlauchrückhaltefläche gepresst werden, wodurch die Dichtigkeit und die Festigkeit der Verbindung erhöht werden.

In einer weiteren bevorzugten Ausgestaltung der erfindungsgemäßen Armatur weist der Nippel einen konstanten Innendurchmesser auf. Auf diese Weist werden die Strömungseigenschaften begünstigt und insbesondere Druckverluste in diesem Bereich minimiert. Zudem kann der Nippel in einfacher Weise hergestellt werden.

In einer weiteren bevorzugten Ausgestaltung der erfindungsgemäßen Armatur weist das Dichtelement ein unrundes Querschnittsprofil auf. Beispielsweise kann das Dichtelement ein rechteckiges oder halbrundes (D-förmiges) Querschnittsprofil aufweisen. Auf diese Weise kann das Dichtelement derart in der Ringnut positioniert werden, dass eine flache Seite des Dichtelements dem Nippel zugewandt ist, so dass das Dichtelement beim Aufschieben des Schlauchendes auf den Nippel nicht aus der Ringnut rutscht. Bevorzugt bildet die Ringnut zu diesem Zweck eine Wandung aus, die ein Volumen mit in Radialrichtung nach außen hin zulaufendem (z.B. trapezförmigem) Querschnittprofil einschließt, in das das Dichtelement eingesetzt ist.

Gemäß dem bereits vor- sowie dem weiter unten nachbeschriebenen wird die eingangs gestellte Aufgabe auch durch eine Verbindungsvorrichtung mit den Merkmalen des Anspruchs 11 gelöst.

Die erfindungsgemäße Verbindungsvorrichtung hat eine erfindungsgemäße Armatur und einen Schlauch, wobei ein Endabschnitt des Schlauches auf den Schlauchaufnahmeabschnitt des Nippels aufgeschoben und mittels der Presshülse auf dem Nippel abdichtend verpresst ist, wobei der Dichtelement-Verpressvorsprung einen das Dichtelement überdeckenden Abschnitt des Schlauches gegen das Dichtelement presst.

Die vor- und nachbeschriebenen technischen Wirkungen und Vorteile der erfindungsgemäßen Armatur werden ebenfalls entsprechend in der erfindungsgemäßen Verbindungsvorrichtung realisiert.

In einer bevorzugten Ausgestaltung der erfindungsgemäßen Verbindungsvorrichtung weist der Schlauch zumindest eine einen Thermoplasten enthaltende Innenschicht und eine einen insbesondere metallischen Festigkeitsträger enthaltende Verstärkungsschicht auf. Auf diese Weise kann eine Verbindungsvorrichtung geschaffen werden, die für den Transport von Wasserstoff geeignet ist. Vorzugsweise weist der Schlauch eine einen Elastomer oder einen Thermoplasten enthaltende Außenschicht auf.

Gemäß dem bereits vor- sowie dem weiter unten nachbeschriebenen wird die eingangs gestellte Aufgabe auch durch ein Hochdrucktanksystem mit den Merkmalen des Anspruchs 14 gelöst.

Das erfindungsgemäße Hochdrucktanksystem hat ein Reservoir für einen Brennstoff, insbesondere Wasserstoff, eine Kraftstoffdüse, die an einen Fahrzeugtank angeschlossen werden kann, und eine erfindungsgemäße Verbindungsvorrichtung, durch die der Behälter und die Kraftstoffdüse fluidleitend miteinander verbunden sind.

Die vor- und nachbeschriebenen technischen Wirkungen und Vorteile der erfindungsgemäßen Armatur und der Verbindungsvorrichtung werden ebenfalls entsprechend in dem erfindungsgemäßen Hochdrucktanksystem realisiert.

Gemäß dem bereits vor- sowie dem weiter unten nachbeschriebenen wird die eingangs gestellte Aufgabe auch durch ein Hochdruckfahrzeugtanksystem mit den Merkmalen des Anspruchs 15 gelöst.

Das erfindungsgemäße Hochdruckfahrzeugtanksystem für ein Fahrzeug hat einen Fahrzeugtank für einen Brennstoff, insbesondere Wasserstoff, einen Einfüllstutzen, an den eine Kraftstoffdüse angeschlossen werden kann, und eine erfindungsgemäße Verbindungsvorrichtung, durch die der Fahrzeugtank und der Einfüllstutzen fluidleitend miteinander verbunden sind.

Die vor- und nachbeschriebenen technischen Wirkungen und Vorteile der erfindungsgemäßen Armatur und der Verbindungsvorrichtung werden ebenfalls entsprechend in dem erfindungsgemäßen Hochdruckfahrzeugtanksystem realisiert.

In Laborversuchen hat sich gezeigt, dass eine mit der erfindungsgemäßen Armatur versehene Schlauchverbindung für Wasserstoffanwendungen Drücken von ca. 2000 bar standhalten kann. Es hat sich überdies gezeigt, dass eine ausreichende Abdichtung bereits mit einem einzigen Dichtelement zum Abdichten des Nippels gegen eine Innenfläche des Schlauches erzielt werden kann. In einer bevorzugten Ausgestaltung der Erfindung ist der Nippel der Armatur in dem Schlauchaufnahmeabschnitt mit einem einzigen Dichtelement versehen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: ein Ausführungsbeispiel einer erfindungsgemäßen Verbindungsvorrichtung in einer Schnittansicht;
- Fig. 2: eine Detailansicht des Nippels aus Fig. 1 im Bereich des Schlauchaufnahmeabschnitts; und
- Fig. 3: einen Detailausschnitt der Fig. 1 im Bereich des Dichtungselements.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

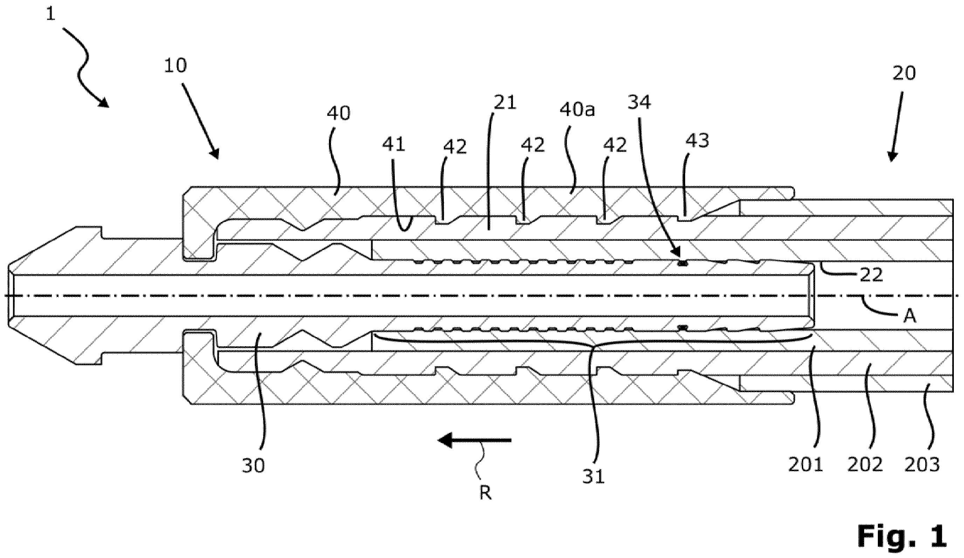

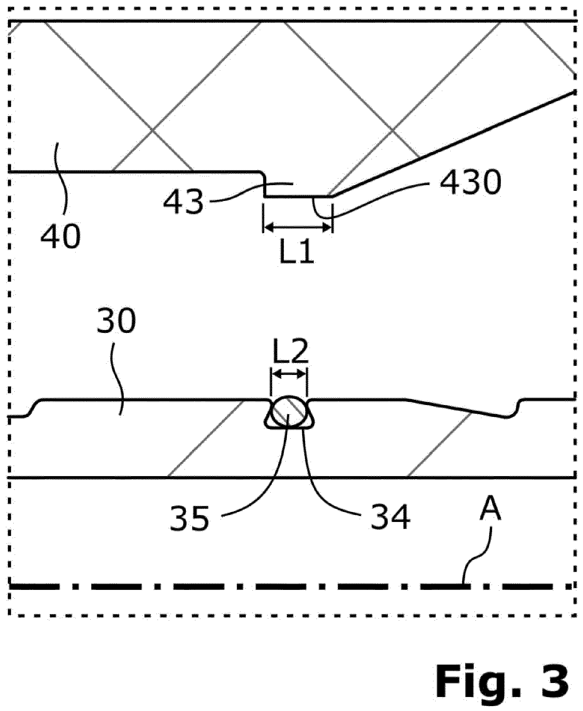

Fig. 1 zeigt ein Ausführungsbeispiel einer erfindungsgemäßen Verbindungsvorrichtung 1, die für den Transport von Wasserstoff unter Hochdruck ausgebildet ist, mit einer Armatur 10 und einem Schlauch 20. Die Armatur 10 hat einen Nippel 30, der eine Längsachse A definiert, und eine Presshülse 40, wobei der Nippel 30 einen von einem rohrförmigen Abschnitt 40a der Presshülse 40 in Axialrichtung überdeckten Schlauchaufnahmeabschnitt 31 aufweist, auf den ein Endabschnitt 21 des Schlauches 20 in einer Aufschubrichtung R aufgeschoben und mittels der Presshülse 40 auf dem Nippel 30 abdichtend verpresst, z.B. gecrimpt, ist. Der Nippel 30 hat eine Ringnut 34, in der ein als O-Ring ausgebildetes Dichtelement 35 zum Abdichten des Nippels 30 gegen eine Innenfläche 22 des Schlauches 20, angeordnet ist. Die Presshülse 40 hat an ihrer Innenseite 41 mehrere in Axialrichtung voneinander beabstandet angeordnete und sich ringsum erstreckende Verpressvorsprünge 42. Ferner hat die Presshülse 40 einen sich ringsum erstreckenden Dichtelement-Verpressvorsprung 43, der dazu ausgebildet ist, das Dichtelement 35 in Axialrichtung vollständig zu überdecken (Fig. 3), wenn der Endabschnitt 21 des Schlauches 20 auf dem Nippel 30 verpresst ist.

Dem Dichtelement 35 ist somit ein eigener Verpressvorsprung zugeordnet, nämlich der Dichtelement-Verpressvorsprung 43, der eigens dazu ausgebildet ist, einen das Dichtelement 35 überdeckenden Abschnitt des Schlauches 20 gezielt gegen das Dichtelement 35 zu pressen, wenn der Schlauch 20 auf dem Nippel 30 verpresst ist, was die Dichtwirkung des Dichtelements 35 verstärkt. Um diese Funktion zu begünstigen, weist der Dichtelement-Verpressvorsprung 35 in der vorliegenden Ausführung einen größeren Innendurchmesser auf als die übrigen Verpressvorsprünge 42, die - in Aufschubrichtung R betrachtet - hinter dem Dichtelement-Verpressvorsprung 43 angeordnet sind.

Der Schlauch 20 hat in der vorliegenden Ausführung eine einen Thermoplasten enthaltende Innenschicht 201, eine einen insbesondere metallischen Festigkeitsträger enthaltende Verstärkungsschicht 202 sowie eine einen Elastomer oder einen Thermoplasten enthaltende Außenschicht 203.

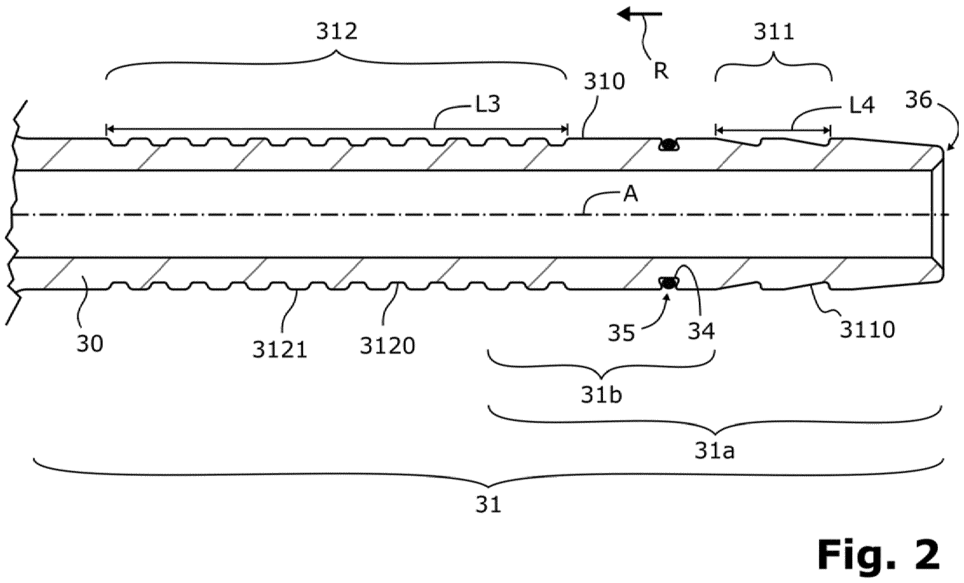

Fig. 2 zeigt den Nippel 30 aus Fig. 1 im Bereich des Schlauchaufnahmeabschnitts 31. An der Außenseite 310 des Schlauchaufnahmeabschnitts 31 bildet der Nippel 30 eine erste unebene Schlauchrückhaltefläche 311 mit konische Flächen ausbildenden Ausnehmungen 3110 und eine zweite unebene Schlauchrückhaltefläche 312 mit zylindrische Flächen ausbildenden Ausnehmungen 3120 aus. Die erste Schlauchrückhaltefläche 311 befindet sich bezüglich der Aufschubrichtung R vor der zweiten Schlauchrückhaltefläche 312, wobei die Ringnut 34 und das darin angeordnete Dichtelement 35 zwischen den beiden Schlauchrückhalteflächen 311, 312 angeordnet sind. Die Ringnut 34 und das darin angeordnete Dichtelement 35 sind in der (in Aufschubrichtung R betrachtet) ersten Hälfte 31a des Schlauchaufnahmeabschnitts 31, genauer im zweiten Viertel 31b des Schlauchaufnahmeabschnitts 31, angeordnet. Eine derartige Positionierung begünstigt die Dichtigkeit und hemmt die Permeation, da eine Barriere für den durch den Schlauch 20 zu transportierenden Wasserstoff (oder ein anderes Fluid) möglichst nah an dem dem Schlauch 20 zugewandten Ende 36 des Nippels 30 bereitgestellt wird. Gleichzeitig befindet sich sowohl vor als auch hinter dem Dichtelement 35 ein Schlauchrückhalteabschnitt 311, 312 mit einer jeweiligen speziellen Geometrie.

Die Ausnehmungen 3110 mit konischen Flächen im ersten Schlauchrückhalteabschnitt 311, deren jeweiliger Außendurchmesser sich in Aufschubrichtung R aufweitet, führen beim Verpressen der Armatur 10 auf einem Schlauch 20 zu einem Verhaken des ersten Schlauchrückhalteabschnitts 311 und der Innenschicht 201 des Schlauches 20, was den Halt zwischen Nippel 30 und Innenschicht 201 und auch die Dichtigkeit der Verbindung begünstigt. Die Ausnehmungen 3120 mit zylindrischen Flächen im zweiten Schlauchrückhalteabschnitt 312 dienen in erster Linie als Barrieren für das durch den Schlauch 20 zu transportierenden Wasserstoff (oder ein anderes Fluid). Diese Ausnehmungen 3120 sollen im Falle, dass der Wasserstoff das Dichtelement 35 passiert, einen möglichst großen Druckverlust erzeugen, was eine Leckage und/oder Permeation hemmt. Beim Verpressen der Armatur 10 auf dem Schlauch 20 können die zwischen den Ausnehmungen 3120 liegenden Abschnitte 3121 des zweiten Schlauchrückhalteabschnitts 312 zudem in die Innenschicht 201 des Schlauches 20 eindringen, was den Halt zwischen Nippel 30 und Innenschicht 201 und auch die Dichtigkeit der Verbindung weiter begünstigt. Es hat sich als vorteilhaft erwiesen, wenn die zweite Schlauchrückhaltefläche 312 eine axiale Länge L3 aufweist, die mindestens 1,5-mal so lang ist, bevorzugt mindestens 2-mal so lang ist, wie die axiale Länge L4 der ersten Schlauchrückhaltefläche 311.

Zur Begünstigung der Strömungseigenschaften weist der Nippel 30 einen konstanten Innendurchmesser auf.

Fig. 3 zeigt einen Detailausschnitt der Fig. 1 im Bereich des Dichtungselements 35. Der Dichtelement-Verpressvorsprung 43 bildet eine dem Dichtelement 35 zugewandte Innenfläche 430 mit einem konstanten Innendurchmesser aus, wobei die Innenfläche 430 eine axiale Länge L1 hat, die größer ist als die axiale Länge L2 des Dichtelements 35, wobei die Innenfläche 430 das Dichtelement 35 in Axialrichtung vollständig überdeckt. Auf diese Weise lässt sich der von der Innenfläche 430 des Dichtelement-Verpressvorsprungs 43 überdeckte Schlauchabschnitt besonders gleichmäßig gegen das gesamte Dichtelement 35 pressen. Hierbei ragt die Innenfläche 430 des Dichtelement-Verpressvorsprungs 43 sowohl in als auch entgegen der Aufschubrichtung R über das Dichtelement 35 hinaus, so dass der Dichtelement-Verpressvorsprung 43 den dazwischenliegenden Schlauchabschnitt nicht nur vollflächig gegen das Dichtelement 35, sondern auch gegen einen die Ringnut 34 umgebenden Randbereich des Nippels 30 presst und somit die Dichtigkeit in diesem Bereich weiter erhöht.

Um einen guten Halt für das Dichtelement 35 bereitzustellen, bildet die Ringnut 34 eine Wandung aus, die ein Volumen mit in Radialrichtung nach außen hin zulaufendem (z.B. trapezförmigem) Querschnittprofil einschließt, in das das Dichtelement 35 eingesetzt ist. Das Dichtelement 35 kann hierzu auch ein unrundes, z.B. D-förmiges, Querschnittsprofil aufweisen und derart in der Ringnut 34 eingesetzt sein, dass die flache Seite des Dichtelements 35 dem Nippel 30 zugewandt ist.

Insgesamt wird eine Schlauch-Armatur-Verbindung geschaffen, die sich durch eine hohe Dichtigkeit sowie geringe Permeation auszeichnet und sich für den Transport von Wasserstoff unter Hochdruck eignet. Beispielsweise kann die erfindungsgemäße Verbindungsvorrichtung 1 in einem Hochdrucktanksystem, z.B. einer Wasserstoffzapfsäule, zur Herstellung einer fluidleitenden Verbindung zwischen dem Reservoir und der Kraftstoffdüse bzw. Zapfpistole eingesetzt werden. Es ist auch denkbar, die erfindungsgemäße Verbindungsvorrichtung 1 innerhalb eines Fahrzeugs z.B. zur Herstellung einer fluidleitenden Verbindung zwischen dem Fahrzeugtank und dem Einfüllstutzen zu verwenden.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste (Teil der Beschreibung)

- 1: Verbindungsvorrichtung
- 10: Armatur
- 20: Schlauch
- 201: Innenschicht des Schlauches
- 202: Verstärkungsschicht des Schlauches
- 203: Außenschicht des Schlauches
- 21: Endabschnitt des Schlauches
- 22: Innenfläche des Schlauches
- 30: Nippel
- 31: Schlauchaufnahmeabschnitt des Nippels
- 310: Außenseite des Schlauchaufnahmeabschnitts
- 31a: erste Hälfte des Schlauchaufnahmeabschnitts
- 31b: zweites Viertel des Schlauchaufnahmeabschnitts
- 311: erste Schlauchrückhaltefläche des Schlauchaufnahmeabschnitts
- 3110: Ausnehmungen mit konischen Flächen
- 312: zweite Schlauchrückhaltefläche des Schlauchaufnahmeabschnitts
- 3120: Ausnehmungen mit zylindrischen Flächen
- 3121: Abschnitte zwischen den Ausnehmungen
- 34: Ringnut
- 35: Dichtelement, O-Ring
- 36: schlauchseitiges Ende des Nippels
- 40: Presshülse
- 40a: rohrförmiger Abschnitt der Presshülse
- 42: Verpressvorsprung
- 43: Dichtelement-Verpressvorsprung
- 430: Innenfläche des Dichtelement-Verpressvorsprungs

- A: Längsachse des Nippels
- L1: axiale Länge der Innenfläche des Dichtelement-Verpressvorsprungs
- L2: axiale Länge des Dichtelements
- L3: axiale Länge der zweiten Schlauchrückhaltefläche
- L4: axiale Länge der ersten Schlauchrückhaltefläche
- R: Aufschubrichtung

## Patentansprüche

1. Armatur (10) zum Anschließen eines Schlauches (20), insbesondere für Hochdruck-Wasserstoff-Fluidleitungen, mit
einem Nippel (30), der eine Längsachse (A) definiert, und einer Presshülse (40),
wobei der Nippel (30) einen von einem rohrförmigen Abschnitt (40a) der Presshülse (40) in Axialrichtung überdeckten Schlauchaufnahmeabschnitt (31) aufweist, auf den ein Endabschnitt (21) des Schlauches (20) in einer Aufschubrichtung (R) aufschiebbar und mittels der Presshülse (40) auf dem Nippel (30) abdichtend verpressbar ist,
wobei der Nippel (30) eine Ringnut (34) aufweist, in der ein insbesondere als O-Ring ausgebildetes Dichtelement (35) zum Abdichten des Nippels (30) gegen eine Innenfläche (22) des Schlauches (20) angeordnet ist,
wobei die Presshülse (40) an ihrer Innenseite (41) mehrere in Axialrichtung voneinander beabstandet angeordnete und sich ringsum erstreckende Verpressvorsprünge (42) sowie einen sich ringsum erstreckenden Dichtelement-Verpressvorsprung (43) aufweist, der dazu ausgebildet ist, das Dichtelement (35) in Axialrichtung zumindest teilweise, insbesondere vollständig, zu überdecken, wenn der Endabschnitt (21) des Schlauches (20) auf dem Nippel (30) verpresst ist.

2. Armatur (10) nach Anspruch 1, wobei die Ringnut (34) und das darin angeordnete Dichtelement (35) in der in Aufschubrichtung (R) betrachtet ersten Hälfte (31a) des Schlauchaufnahmeabschnitts (31), bevorzugt im zweiten Viertel (31b) des Schlauchaufnahmeabschnitts (31), angeordnet sind.

3. Armatur (10) nach Anspruch 1 oder 2, wobei der Dichtelement-Verpressvorsprung (43) einen größeren Innendurchmesser aufweist als die Verpressvorsprünge (42).

4. Armatur (10) nach einem der vorangehenden Ansprüche, wobei der Dichtelement-Verpressvorsprung (43) eine dem Dichtelement (35) zugewandte Innenfläche (430) mit einem konstanten Innendurchmesser ausbildet, wobei die Innenfläche (430) eine axiale Länge (L1) hat, die größer ist als die axiale Länge (L2) des Dichtelements (35), insbesondere wobei die Innenfläche (430) das Dichtelement (35) in Axialrichtung vollständig überdeckt, wenn der Endabschnitt (21) des Schlauches (20) auf dem Nippel (30) verpresst ist.

5. Armatur (10) nach einem der vorangehenden Ansprüche, wobei der Nippel (30) an der Außenseite (310) des Schlauchaufnahmeabschnitts (31) zumindest eine unebene Schlauchrückhaltefläche (311, 312) ausbildet.

6. Armatur (10) nach Anspruch 5, wobei der Nippel (30) an der Außenseite (310) des Schlauchaufnahmeabschnitts (31) eine erste unebene Schlauchrückhaltefläche (311) und eine zweite unebene Schlauchrückhaltefläche (312) aufweist, wobei sich die erste Schlauchrückhaltefläche (311) bezüglich der Aufschubrichtung (R) vor der zweiten Schlauchrückhaltefläche (312) befindet, wobei die Ringnut (34) und das darin angeordnete Dichtelement (35) zwischen den beiden Schlauchrückhalteflächen (311, 312) angeordnet sind.

7. Armatur (10) nach Anspruch 6, wobei die erste Schlauchrückhaltefläche (311) konische Flächen ausbildende Ausnehmungen (3110) aufweist und/oder wobei die zweite Schlauchrückhaltefläche (312) zylindrische Flächen ausbildende Ausnehmungen (3120) aufweist.

8. Armatur (10) nach Anspruch 6 oder 7, wobei die zweite Schlauchrückhaltefläche (312) eine axiale Länge (L3) aufweist, die mindestens 1,5-mal so lang ist, bevorzugt mindestens 2-mal so lang ist, wie die axiale Länge (L4) der ersten Schlauchrückhaltefläche (311).

9. Armatur (10) nach einem der vorangehenden Ansprüche, wobei der Nippel (30) einen konstanten Innendurchmesser aufweist.

10. Armatur (10) nach einem der vorangehenden Ansprüche, wobei das Dichtelement (35) ein unrundes Querschnittsprofil, insbesondere ein D-förmiges Querschnittsprofil, aufweist.

11. Verbindungsvorrichtung (1) mit
einer Armatur (10) nach einem der vorangehenden Ansprüche und
einem Schlauch (20),
wobei ein Endabschnitt (21) des Schlauches (20) auf den Schlauchaufnahmeabschnitt (31) des Nippels (30) aufgeschoben und mittels der Presshülse (40) auf dem Nippel (30) abdichtend verpresst ist,
wobei der Dichtelement-Verpressvorsprung (43) einen das Dichtelement (35) überdeckenden Abschnitt des Schlauches (20) gegen das Dichtelement (35) presst.

12. Verbindungsanordnung (1) nach Anspruch 11, wobei der Schlauch (20) zumindest eine einen Thermoplasten enthaltende Innenschicht (201) und eine einen insbesondere metallischen Festigkeitsträger enthaltende Verstärkungsschicht (202) aufweist.

13. Verbindungsanordnung (1) nach Anspruch 12, wobei der Schlauch (20) eine einen Elastomer oder einen Thermoplasten enthaltende Außenschicht (203) aufweist.

14. Hochdrucktanksystem enthaltend
ein Reservoir für einen Brennstoff, insbesondere Wasserstoff,
eine Kraftstoffdüse, die an einen Fahrzeugtank angeschlossen werden kann, und eine Verbindungsvorrichtung (1) nach einem der Ansprüche 10 bis 12, durch die der Behälter und die Kraftstoffdüse fluidleitend miteinander verbunden sind.

15. Hochdruckfahrzeugtanksystem für ein Fahrzeug enthaltend
einen Fahrzeugtank für einen Brennstoff, insbesondere Wasserstoff,
einen Einfüllstutzen, an den eine Kraftstoffdüse angeschlossen werden kann,
und eine Verbindungsvorrichtung (1) nach einem der Ansprüche 10 bis 12, durch die der Fahrzeugtank und der Einfüllstutzen fluidleitend miteinander verbunden sind.
